# EUROPÄISCHE PATENTANMELDUNG

(11) **EP 2 572 842 A2**
(43) Veröffentlichungstag der Anmeldung: **27.03.2013**
(21) Anmeldenummer: 12006461.3
(22) Anmeldetag: 14.09.2012
(51) Int. Cl.: B26D 5/00, B25J 9/16, B25J 11/00

(54) **Vorrichtung zum Aufschneiden von einem Lebensmittelprodukt und Vorrichtung mit einem Roboter**

(30) Priorität: 22.09.2011 DE 102011114180
(71) Anmelder: Weber Maschinenbau GmbH Breidenbach, 35236 Breidenbach (DE)
(72) Erfinder:
(74) Vertreter: Grünecker, Kinkeldey, Stockmair & Schwanhäusser

(57) **Zusammenfassung**

Die vorliegende Erfindung betrifft eine Vorrichtung mit einem Roboter (18) zum Verlagern eines Lebensmittelproduktes, insbesondere von Lebensmittelscheiben, wobei der Roboter (18) wenigstens einen Roboterarm (23, 24) aufweist, an dem sich eine Greifereinheit (21) zum Ergreifen der Lebensmittelprodukte befindet, und wobei der Roboter (18) ausgelegt ist, Lebensmittelprodukte von einer Auflage aufzunehmen, und zu einem gewünschten Ort zu verlagern. Die Vorrichtung weist ein Kontrollsystem auf, in dem wenigstens eine Vorgabe für ein Bewegungsprogramm für den Roboter (18) gespeichert wird. Erfindungsgemäß ist das Kontrollsystem ausgelegt, wenigstens einen Zustandsparameter zu überwachen, und in Abhängigkeit des wenigstens einen Zustandsparameters und des Bewegungsprogramms zu bestimmen, ob eine vorbestimmte Bedingung erfüllt wurde, die insbesondere eine Wartungsmaßnahme bedingt.

## Beschreibung

Die vorliegende Erfindung bezieht sich auf eine Vorrichtung zum Aufschneiden von einem Lebensmittelprodukt und eine Vorrichtung mit einem Roboter zum Verlagern eines Lebensmittelproduktes.

Vorrichtungen zum Aufschneiden von Lebensmittelprodukten sind im Stand der Technik bekannt. Dabei handelt es sich beispielsweise um Slicer, die eine durch einen Antrieb antreibbare Schneideinrichtung mit einem rotierenden Schneidmesser, eine Produktzufuhr, die das Lebensmittelprodukt der Schneideinrichtung zuführt, und eine Aufnahmeeinrichtung, die ausgelegt ist, Lebensmittelscheiben aufzunehmen, die vom Lebensmittelprodukt abgeschnitten werden, aufweisen. Zudem können derartige Slicer ein Kontrollsystem umfassen, das den Aufschneidevorgang steuert.

Weiterhin sind im Stand der Technik Vorrichtungen mit einem Roboter zum Verlagern eines Lebensmittelproduktes, insbesondere von Lebensmittelscheiben, bekannt, wobei der Roboter wenigstens einen Roboterarm aufweist, an dem sich eine Greifereinheit zum Ergreifen der Lebensmittelprodukte befindet, und wobei der Roboter ausgelegt ist, die Lebensmittelprodukte von einer Auflage aufzunehmen und zu einem gewünschten Ort zu verlagern. Auch diese Vorrichtungen können ein Kontrollsystem aufweisen, das wenigstens eine Vorgabe für ein Bewegungsprogramm für den Roboter speichert, und die Steuerung des Roboters durchführt.

Ausgehend vom bekannten Stand der Technik ist es die Aufgabe der Erfindung, während des Produktionseinsatzes der Vorrichtung die Betriebssicherheit zu erhöhen.

Die Aufgabe der Erfindung wird gelöst durch eine Vorrichtung zum Aufschneiden von einem Lebensmittelprodukt, mit einer durch einen Antrieb antreibbaren Schneideinrichtung, insbesondere einem rotierenden Schneidmesser, einer Produktzufuhr, die das Lebensmittelprodukt der Schneideinrichtung zuführt, einer Aufnahmeeinrichtung, die ausgelegt ist, Lebensmittelscheiben aufzunehmen, die von dem Lebensmittelprodukt abgeschnitten werden, und einem Kontrollsystem, in dem wenigstens eine Vorgabe gespeichert wird. Erfindungsgemäß ist das Kontrollsystem ausgelegt, wenigstens einen Zustandsparameter zu überwachen und in Abhängigkeit des wenigstens einen Zustandsparameters und der wenigstens einen gewählten Vorgabe zu bestimmen, ob eine vorbestimmte Bedingung erfüllt wurde, die insbesondere eine Wartungsmaßnahme bedingt. Durch die Kombination der Überwachung des Zustandsparameters und der Vorgabe ist es möglich, aussagekräftige Informationen über den Zustand der Vorrichtung bereitzustellen, die ermöglichen, vorherzusagen, ob und insbesondere wann ein Ausfall der Vorrichtung bevorsteht oder eine Wartungsmaßnahme notwendig ist. Die Zustandsparameter können dabei beliebige in der Vorrichtung zu erfassende Größen sein, die durch beliebige Sensoren erfassbar sind. Die Vorgabe ist insbesondere eine dem Kontrollsystem übermittelte Information, die dessen Steuerungseigenschaften oder Regelungseigenschaften beeinflusst.

Die durchgehende Überwachung der Zustandsgrößen ermöglicht den Zeitpunkt des Eintretens eines Betriebszustands, der eine vorbestimmte Bedingung erfüllt, vorherzusagen. Solch ein Betriebszustand ist insbesondere ein Betriebsausfall oder eine Minderleistung der Vorrichtung. Somit kann einerseits flexibel und interaktiv das Wartungsintervall optimal angepasst werden, und andererseits können frühzeitig Gegenmaßnahmen getroffen werden, die den Eintritt der vorbestimmten Bedingung verzögern.

Lebensmittelprodukte, die in der erfindungsgemäßen Vorrichtung aufgeschnitten werden, sind insbesondere Lebensmittelstangen, beispielsweise Käsestangen, Wurststangen oder Schinkenstangen, aber auch Produkte mit einer entlang ihrer Längsrichtung variablen Form, wie beispielsweise naturgeformter Schinken oder Käse.

Insbesondere ist das Kontrollsystem ausgelegt, wenigstens eine Vorgabe für ein Schneidprogramm zu speichern, die aus einer Vielzahl von Vorgaben für Schneidprogramme gewählt wurde, wobei das Kontrollsystem weiterhin ausgelegt ist, in Abhängigkeit des wenigstens einen Zustandsparameters und der wenigstens einen gewählten Vorgabe des Schneidprogramms zu bestimmen, ob die vorbestimmte Bedingung erfüllt wurde.

In einem Ausführungsbeispiel, ist ein Zustandsparameter die Temperatur des Antriebs. Dabei kann insbesondere ein Temperatursensor zum Einsatz kommen, der entweder direkt am Antrieb befestigt ist, oder die Temperatur über eine Infrarotmessung in einem gewissen Abstand zum Antrieb vornimmt.

Durch die Temperatur des Antriebs kann beispielsweise auf die Leistung des Antriebs geschlossen werden. Über die Leistung des Antriebs kann dann in Abhängigkeit einer gewählten Vorgabe, insbesondere der Schneidgeschwindigkeit und/oder der Zähigkeit des aufzuschneidenden Lebensmittelproduktes, die Schärfe des Schneidmesser bestimmt werden, die in den Verschleiß des Schneidmessers umgerechnet werden kann. Die vorbestimmte Bedingung kann dann beispielsweise sein, dass das Schneidmesser eine gewisse Schärfe aufweist, und die Wartungsmaßnahme kann ein Nachschleifen oder Austausch des Schneidmessers sein.

Insbesondere ist der Antrieb ein Elektromotor, und ein Zustandsparameter ist der Motorstrom des Elektromotors. Damit kann ebenfalls die Leistung des Elektromotors bestimmt werden, und daraus beispielsweise die Erfüllung der vorbestimmten Bedingung bezüglich der Notwendigkeit des Nachschärfens oder des Austauschs des Schneidmessers bestimmt werden.

Insbesondere kann die Lebensdauer des Schneidmessers durch die vorangehend erläuterten Auswertungen bestimmt werden.

In einer Ausführungsform ist ein Greifer mit einem Greiferantrieb vorgesehen, wobei der Greifer ausgelegt ist, in Eingriff mit dem Lebensmittelprodukt während des Aufschneidens des Lebensmittelprodukts gebracht zu werden, und wobei ein Zustandsparameter der Motorstrom des Greiferantriebs ist. Insbesondere wird der Greifer mit dem Ende des Lebensmittelproduktes in Eingriff gebracht, das dem der Schneideinrichtung zugerichteten Ende des Lebensmittelproduktes gegenüber liegt. Der Greifer kann einerseits dazu dienen, die Produktzufuhr des Lebensmittelproduktes zu ermöglichen. Zusätzlich oder alternativ kann der Greifer dazu dienen, das von ihm gehaltene Ende des Lebensmittelproduktes während des Aufschneidevorgangs zu stabilisieren. Durch die Erfassung des Motorstroms als Zustandsparameter kann insbesondere die Leistung des Greiferantriebs oder Greiferbackenantriebs bestimmt werden, wodurch vornehmlich ermittelt werden kann, ob der Greiferantrieb oder Greiferbackenantrieb ordnungsgemäß funktioniert. Dafür wird dieser Zustandsparameter zusammen mit einer gewählten Vorgabe, wie beispielsweise der Vorschubgeschwindigkeit des Greifers oder der vorgegebenen Greiferbackenbewegung verrechnet, und es wird bestimmt, ob die vorbestimmte Bedingung erfüllt ist, dass der Greiferantrieb oder Greiferbackenantrieb nicht mehr ordnungsgemäß funktioniert.

In einem Ausführungsbeispiel ist der Zustandsparameter der Schneiddruck der Schneideinrichtung. Aus dem Schneiddruck kann mittels den bekannten Vorgaben, insbesondere der Drehgeschwindigkeit des Schneidmessers und der Zähigkeit des aufzuschneidenden Lebensmittelproduktes, sowie der Geometrie des aufzuschneidenden Lebensmittelproduktes, bestimmt werden, ob der Antrieb der Schneideinrichtung ordnungsgemäß funktioniert, oder ob das Schneidmesser nachgeschärft oder ausgetauscht werden muss.

In einer Ausführungsform ist ein Zustandsparameter eine Vibrationsfrequenz und/oder Vibrationsintensität an der Vorrichtung. Aus der Vibrationsintensität und den Vorgaben des Kontrollsystems können eine Vielzahl von vorbestimmten Bedingungen ermittelt werden, beispielsweise hinsichtlich der ordnungsgemäßen Funktion des Schneidmessers, der Produktzufuhr und des Antriebs der Schneideinrichtung. Tritt beispielsweise ein Abweichen der Drehzahl eines rotierenden Schneidmessers von der vorgegebenen Drehzahl auf, kann dies einfach durch Bestimmung der Vibrationsfrequenz und/oder Vibrationsintensität bestimmt werden. Ein Abstumpfen des Schneidmessers kann zu einer Erhöhung der Vibrationsintensität führen, da dem Schneidvorgang ein höherer Widerstand entgegengesetzt wird. Weiterhin kann über die Vibrationsfrequenz und/oder Vibrationsintensität bestimmt werden, ob Unwuchten vorliegen.

In einem Ausführungsbeispiel ist ein Zustandsparameter die Schwingungsintensität oder Schwingungsfrequenz der Schneidkante des Schneidmessers. Dafür kann ein Beschleunigungssensor direkt am Schneidmesser angebracht werden. Alternativ kann auch durch eine Abstandsmessung, beispielsweise mittels eines Lasersensors, die Schwingungsintensität oder Schwingungsfrequenz der Schneidkante bestimmt werden. Weiterhin kann auch ein Dehnmesstreifen am Schneidmesser angebracht werden, mit dem die dynamische Deformation des Schneidmessers erfasst, und daraus die Schwingungsintensität oder Schwingungsfrequenz bestimmt werden kann.

In einem Ausführungsbeispiel ist ein Zustandsparameter die Temperatur des Lebensmittelprodukts direkt vor dem Aufschneiden oder der aufgeschnittenen Lebensmittelscheiben direkt nach dem Aufschneiden. Die Temperatur kann insbesondere durch eine Infrarottemperaturmessung erfolgen. Durch die Temperatur des Lebensmittelprodukts an der Schneidkante kann beispielsweise auf den Verschleiß des Schneidmessers geschlossen werden.

Die Vorgaben des Schneidprogramms umfassen insbesondere die Schneidgeschwindigkeit der Schneideinrichtung, die Art des Lebensmittelprodukts und/oder die Vorschubgeschwindigkeit des Lebensmittelprodukts. Die Art des Lebensmittelprodukts ist eine produktspezifische Vorgabe und umfasst insbesondere die Zähigkeit beziehungsweise Härte und die Dicke und/oder Querschnittsform des Lebensmittelprodukts. Vorgaben für das Schneidprogramm sind weiterhin abgeleitete Größen wie die Scheibendicke des aufgeschnittenen Lebensmittelprodukts. Auch vorrichtungsspezifische Vorgaben für das Schneidprogramm sind möglich, wie beispielsweise der Motorstrom, die Motordrehzahl, der Steuerstrom für den Vorschub oder die Leistung des Vorschubs der Produktzufuhr.

In einer Ausführungsform ist das Kontrollsystem ausgelegt, die wenigstens eine Vorgabe des Schneidprogramms mit dem wenigstens einen Zustandsparameter zu verrechnen, um zu bestimmen, ob die vorbestimmte Bedingung erreicht oder erfüllt wurde. Beispielsweise kann aus einer Vorgabe des Schneidprogramms, nämlich der Aufschnittgeschwindigkeit, und dem Zustandsparameter Motorstrom berechnet werden, ob das Schneidmesser bereits verschlissen ist.

Vornehmlich wird die vorbestimmte Bedingung beim Verlassen eines Toleranzbereiches für einen Zustandsparameter erreicht, wobei sich der Toleranzbereich in Abhängigkeit der wenigstens einen Vorgabe des Schneidprogramms ergibt. Dabei kann der Toleranzbereich eine einseitig oder zweiseitig begrenzte Menge sein. Alternativ zu einem Toleranzbereich kann ein Toleranzraum für eine Vielzahl von Zustandsparametern in Abhängigkeit der wenigstens einen Vorgabe des Schneidprogramms berechnet werden, wobei die Dimension des Toleranzbereichs der Anzahl der überwachten Zustandsparameter entspricht. Beispielsweise kann für eine gewisse Art einer Lebensmittelstange als Vorgabe ein maximaler und minimaler Motorstrom bestimmt werden, der eine ordnungsgemäße Funktion der Aufschneidvorrichtung sicherstellt. Wird dieser Toleranzbereich durch den Zustandsparameter Motorstrom verlassen, wird die vorbestimmte Bedingung als erfüllt angesehen, und eine Wartungsmaßnahme bedingt, beispielsweise der Austausch des Schneidmessers.

In einem Ausführungsbeispiel ist das Schneidmesser der Schneideinrichtung mit einem Sensor zum Erfassen des wenigstens einen Zustandsparameters ausgestattet. Der Sensor kann insbesondere die Geschwindigkeit, Beschleunigung oder Temperatur des Schneidmessers als Zustandsparameter erfassen, wobei daraus unter Berücksichtigung der Vorgabe insbesondere Rückschlüsse auf den Verschleiß des Schneidmessers gezogen werden können.

Die Aufgabe der Erfindung wird weiterhin durch eine Vorrichtung mit einem Roboter zum Verlagern eines Lebensmittelproduktes, insbesondere von Lebensmittelscheiben, gelöst, wobei der Roboter wenigstens einen Roboterarm aufweist, an dem sich eine Greifereinheit zum Ergreifen der Lebensmittelprodukte befindet, und wobei der Roboter ausgelegt ist, Lebensmittelprodukte von einer Auflage aufzunehmen und zu einem gewünschten Ort zu verlagern, wobei die Vorrichtung ein Kontrollsystem aufweist, in dem wenigstens eine Vorgabe für ein Bewegungsprogramm für den Roboter gespeichert wird. Die Greifereinheit ist als generelles Handhabungselement zu verstehen, und umfasst Greifereinheiten, die Lebensmittelprodukte beidseitig oder einseitig untergreifen, aber auch tablettartige Greifereinheiten, die lediglich eine Auflagefläche für das Lebensmittelprodukt bilden. Insbesondere kann die tablettartige Auflagefläche als Förderband ausgestaltet sein, um die Aufnahme und Ablage der Lebensmittelprodukte einfacher zu gestalten. Erfindungsgemäß ist das Kontrollsystem ausgelegt, wenigstens einen Zustandsparameter zu überwachen und in Abhängigkeit des wenigstens einen Zustandsparameters und des Bewegungsprogramms zu bestimmen, ob eine vorbestimmte Bedingung erfüllt wurde, die insbesondere eine Wartungsmaßnahme bedingt. Dadurch, dass in Abhängigkeit des Zustandsparameters und des Bewegungsprogramms bestimmt wird, ob eine vorbestimmte Bedingung erfüllt wurde, kann eine genaue Überwachung der ordnungsgemäßen Funktion des Roboters gewährleistet werden.

Die durchgehende Überwachung der Zustandsgrößen ermöglicht den Zeitpunkt des Eintretens eines Betriebszustands, der eine vorbestimmte Bedingung erfüllt, vorherzusagen. Solch ein Betriebszustand ist insbesondere ein Betriebsausfall oder eine Minderleistung der Vorrichtung. Somit kann einerseits flexibel und interaktiv das Wartungsintervall optimal angepasst werden, und andererseits können frühzeitig Gegenmaßnahmen getroffen werden, die den Eintritt der vorbestimmten Bedingung verzögern.

In einer Ausführungsform ist das Kontrollsystem ausgelegt, wenigstens eine Vorgabe für ein Bewegungsprogramm zu speichern, die aus einer Vielzahl von Vorgaben für Bewegungsprogramme gewählt wurde, wobei das Kontrollsystem weiterhin ausgelegt ist, zusätzlich in Abhängigkeit der wenigstens einen gewählten Vorgabe zu bestimmen, ob die vorbestimmte Bedingung erfüllt wurde. Die Vorgaben für das Bewegungsprogramm sind insbesondere die Geschwindigkeiten und Trajektorien des Roboterarms, und die Bewegungen des Greifers.

In einer Ausführungsform weist der Roboterarm einen elektrischen Antrieb auf, und ein Zustandsparameter ist der Versorgungsstrom dieses Antriebs. Sollte nun ein Missverhältnis zwischen dem gewählten Bewegungsprogramm und dem dafür notwendigen Versorgungsstrom auftreten, ist die vorbestimmte Bedingung erfüllt, und es wird insbesondere einem Benutzer angezeigt, dass der Roboter einer Wartung bedarf.

Alternativ oder zusätzlich kann ein Zustandsparameter die Temperatur des elektrischen Antriebs sein. Auch daraus kann auf die Leistung des elektrischen Antriebs geschlossen werden, und somit kann in Abhängigkeit von dem Bewegungsprogramm bestimmt werden, ob die vorbedingte Bedingung erfüllt ist.

In einer Ausführungsform ist der Zustandsparameter die Position und/oder Geschwindigkeit des wenigstens einen Roboterarms, wobei diese insbesondere mit einem Inkrementalgeber erfasst wird. Wenn Unterschiede zwischen der Position und/oder Geschwindigkeit des Roboterarms und den diesbezüglichen Vorgaben des Bewegungsprogramms oder abgeleiteten Vorgaben des Bewegungsprogramms auftreten, kann ebenfalls daraus geschlossen werden, dass eine Wartungsmaßnahme für den Roboter notwendig ist.

In einer Ausführungsform kann eine Kamera vorgesehen sein, die wenigstens einen Zustandsparameter der Vorrichtung erfasst. Dieser Zustandsparameter kann beispielsweise durch Bildverarbeitung der von der Kamera aufgenommenen Bilder berechnet werden. Beispielsweise kann die Position des Roboters durch die Kamera bestimmt werden oder die Geschwindigkeit des Roboters. Die Kamera kann auch Zustandsparameter der Vorrichtung zum Aufschneiden eines Lebensmittelprodukts erfassen.

In einer Ausführungsform ist die Kamera und das Kontrollsystem ausgelegt, die Position der Lebensmittelscheiben als Zustandsparameter zu bestimmen. Damit kann einerseits bestimmt werden, ob die Lebensmittelscheiben dem Roboter an der vorgesehenen Position zugeführt werden. Weiterhin kann aber auch bestimmt werden, ob der Roboter die Lebensmittelscheiben an vorgesehenen Positionen ablegt. Sollten Diskrepanzen zwischen der vorgegebenen Position für die Ablage der Lebensmittelscheiben, die durch das Bewegungsprogramm bestimmt werden, und der tatsächlichen Ablageposition vorliegen, kann eine Wartungsmaßnahme bedingt werden. In der Vorrichtung zum Aufschneiden von Lebensmittelprodukten kann überprüft werden, ob die Scheiben an vorgegebener Stelle nach dem Schneidvorgang zum Liegen kommen.

Insbesondere können die Kamera und das Kontrollsystem ausgelegt sein, den Mittelpunkt der Lebensmittelscheiben als Zustandsparameter zu bestimmen. Dies ist insbesondere durch Erfassung des Umrisses der Lebensmittelscheiben durch Bildbearbeitung und Berechnung des Mittelpunkts daraus möglich.

In einer Ausführungsform ist das Kontrollsystem ausgelegt, einen Betriebsparameter der Vorrichtung anzupassen, wenn die vorbestimmte Bedingung erfüllt wurde. Das heißt, es kann anstelle der sofortigen Notwendigkeit der Durchführung einer Wartung, auch eine Anpassung des Betriebs der Vorrichtung stattfinden. Die Anpassung des Betriebsparameters kann insbesondere bedeuten, dass die Antriebe der Vorrichtung verlangsamt oder abgeschaltet werden. Weiterhin kann der Betriebsparameter eine Änderung des Bewegungsprogramms bedingen. Damit kann die Vorrichtung noch weiter betrieben werden, bis zu einem geeigneten Zeitpunkt eine Wartung durchgeführt werden kann.

Das Kontrollsystem kann vorteilhafterweise ausgelegt sein, einen Warnhinweis auszugeben, wenn die vorbestimmte Bedingung erfüllt wurde. Dieser Warnhinweis kann beispielsweise akustisch oder über ein Bedienfeld ausgegeben werden. In anderen Ausführungsformen kann der Warnhinweis an mobile Endgeräte oder an ein zentrales Überwachungsterminal ausgegeben werden.

Das Kontrollsystem kann ausgelegt sein, dass wenigstens ein Zustandsparameter kontinuierlich überwacht wird. Dies ist insbesondere in analogen Kontrollsystemen der Fall. Insbesondere kann ein durch einen Sensor ermittelter Spannungswert als Zustandsparameter mit einem Vergleichsspannungswert verglichen werden, wobei der Vergleichsspannungswert in Abhängigkeit der Vorgaben des Schneidprogramms oder Bewegungsprogramms festgelegt werden kann.

In anderen Ausführungsformen ist es möglich, dass das Kontrollsystem ausgelegt ist, dass wenigstens ein Zustandsparameter an diskreten Abtastzeitpunkten überwacht wird. Dies ist insbesondere bei digitalen Kontrollsystemen der Fall.

Das Kontrollsystem kann ausgelegt sein, durch Auswerten wenigstens eines Zustandsparameters von verschiedenen Zeitpunkten miteinander zu bestimmen, ob die vorbestimmte Bedingung erreicht wurde, insbesondere kann die Veränderung eines Zustandsparameters Aufschluss darüber geben, inwieweit eine Komponente der Vorrichtung der Wartung bedarf. So kann beispielsweise durch ein Ansteigen des Motorstroms oder einer Temperatur, durch ein Absinken der Bewegungsgenauigkeit, oder ein Ansteigen der Vibrationsintensität die vorbestimmte Bedingung erreicht werden, und eine Wartungsmaßnahme bedingt werden.

In einer Ausführungsform ist das Kontrollsystem ausgelegt, wenigstens einen Zustandsparameter in die Berechnung der vorbestimmten Bedingung einzubeziehen. So kann beispielsweise die Geschwindigkeit eines Antriebs in die Berechnung einer vorbestimmten Bedingung insbesondere bezüglich einer Maximaltemperatur eines Antriebs eingehen.

In einer Ausführungsform ist ein Speicherelement vorgesehen, das ausgelegt ist, die Zustandsparameter abzuspeichern. Dies hat insbesondere den Vorteil, dass die Entwicklung der Zustandsparameter bei der Wartung der Vorrichtung ausgelesen werden, um zusätzliche Informationen bezüglich des Betriebs der Vorrichtung erhalten zu können. Damit können insbesondere Gegenmaßnahmen getroffen werden können, die einen längeren Betrieb der Vorrichtung ohne Wartung bedingen. Weiterhin kann das Speicherelement die Zustandsparameter von verschiedenen Zeitpunkten bereitstellen, die ausgewertet werden, ob dadurch die vorbestimmte Bedingung erfüllt wurde. Insbesondere kann die Änderung eines Zustandsparameters über die Zeit in die Auswertung der vorbestimmten Bedingung einfließen.

Die Aufgabe wird weiterhin erfüllt durch eine Vorrichtung zum Aufschneiden von einem Lebensmittelprodukt, mit einer durch einen Antrieb antreibbaren Schneideinrichtung, insbesondere einem rotierenden Schneidmesser, einer Produktzufuhr, die das Lebensmittelprodukt der Schneideinrichtung zuführt, und einer Aufnahmeeinrichtung, die ausgelegt ist, Lebensmittelscheiben aufzunehmen, die von dem Lebensmittelprodukt abgeschnitten werden. Erfindungsgemäß ist wenigstens eine Kamera vorgesehen, die ausgelegt ist, wenigstens eine Information bezüglich der Schneideinrichtung und/oder des Lebensmittelprodukts, beziehungsweise der Lebensmittelscheiben, zu erfassen.

Durch das Vorsehen einer Kamera zur Überwachung des Betriebs der gattungsgemäßen Vorrichtung, insbesondere einem Slicer, kann dessen ordnungsgemäße Funktion überwacht werden, und bereits frühzeitig ermittelt werden, ob eine Fehlfunktion oder Wartungsbedürftigkeit vorliegt. Insbesondere wird die durch die Kamera erfasste Information in einer Auswerteeinheit verarbeitet, um daraus abstrahierte Größen zu ermitteln. Dafür werden eine Bildverarbeitung und eine logische Verarbeitung des Ergebnisses der Bildverarbeitung vorgenommen.

In einer Ausführungsform ist die Kamera ausgelegt, die Ausrichtung des Lebensmittelproduktes zu überwachen. Damit kann die ordnungsgemäße Zuführung des Lebensmittelproduktes sichergestellt werden.

Vorteilhafterweise ist die Kamera ausgelegt, die Struktur oder Größe der Lebensmittelscheiben zu überwachen. Damit können durch die Schneideinrichtung erzeugte Produkte analysiert und bewertet werden, und insbesondere können frühzeitig Fehlfunktionen erkannt werden, vornehmlich wenn das Schneidergebnis nicht den produktspezifischen Vorgaben entspricht.

Weiterhin kann die Kamera ausgelegt sein, den Verschleiß des Schneidmessers zu überwachen. Hierfür kann die Kamera insbesondere die Form des Schneidmessers erfassen, und mit einer vorgegebenen Form vergleichen. Dadurch kann beispielsweise erkannt werden, ob die Schneidkante noch genügend spitz zuläuft oder in anderer Art und Weise nicht mehr den Vorgaben entspricht. Insbesondere kann der Verschleiß des Schneidmessers bestimmt werden, wenn das Schneidmesser angehalten wird.

Die Kamera kann auch ausgelegt sein, die Form des eingelegten Schneidmessers zu bestimmen. Damit kann insbesondere ermittelt werden, ob die Form den Vorgaben für das zu verwendende Schneidmesser, die auch vom Schneidprogramm abhängen können, erfüllt.

Insbesondere kann festgestellt werden, ob das Schneidmesser ein Originalteil ist, und somit für den Einsatz in der Schneideinrichtung geeignet ist.

Die Aufgabe der Erfindung wird weiterhin erfüllt, durch eine Vorrichtung mit einem Roboter zum Verlagern eines Lebensmittelproduktes, insbesondere von Lebensmittelscheiben, wobei der Roboter wenigstens einen Roboterarm aufweist, an dem sich eine Greifereinheit zum Ergreifen der Lebensmittelprodukte befindet, und wobei der Roboter ausgelegt ist, Lebensmittelprodukte von einer Auflage aufzunehmen, und zu einem gewünschten Ort zu verlagern. Die Greifereinheit ist als generelles Handhabungselement zu verstehen, und umfasst Greifereinheiten, die Lebensmittelprodukte beidseitig oder einseitig untergreifen, aber auch tablettartige Greifereinheiten, die lediglich eine Auflagefläche für das Lebensmittelprodukt bilden. Insbesondere kann die tablettartige Auflagefläche als Förderband ausgestaltet sein, um die Aufnahme und Ablage der Lebensmittelprodukte einfacher zu gestalten. Erfindungsgemäß ist wenigstens eine Kamera vorgesehen, die ausgelegt ist, eine Information bezüglich des Roboters und/oder des Lebensmittelproduktes zu erfassen. Damit kann der ordnungsgemäße Betrieb und die Wartungsbedürftigkeit des Roboters überwacht werden.

Insbesondere kann die Kamera ausgelegt sein, die Position der Lebensmittelscheiben zu bestimmen. Die Position der Lebensmittelscheiben kann auf der Auflage bestimmt werden und/oder an dem gewünschten Ort, an den sie verlagert werden. Insbesondere die Endposition der Lebensmittelprodukte am gewünschten Ort gibt Aufschluss über die ordnungsgemäße Funktion des Roboters. Die Position der Lebensmittelprodukte auf der Auflage kann dazu verwendet werden, die Trajektorie des Roboters anzupassen, so dass die Lebensmittelprodukte optimal aufgenommen werden können.

Insbesondere ist die Kamera ausgelegt, den Mittelpunkt der Lebensmittelscheiben zu bestimmen. Dies kann durch eine der Kamera zugeordnete Auswerteeinrichtung ermöglicht werden. Durch eine Veränderung des jeweiligen Mittelpunkts von verschiedenen Lebensmittelscheiben am gewünschten Ort bei aufeinanderfolgenden Verlagerungsvorgängen des Lebensmittelproduktes kann bestimmt werden, dass die Funktion des Roboters nicht mehr ordnungsgemäß ist. Weiterhin kann vorausgesagt werden, wann eine Wartung des Roboters notwendig ist.

In einer Ausführungsform ist die Kamera ausgelegt, die Position der Greifereinheit zu bestimmen. Insbesondere können Bewegungsbegrenzungen überwacht werden, so dass der Roboter in einem vorbestimmten Bereich bleibt.

In einer Ausführungsform weist die Vorrichtung zum Aufschneiden von einem Lebensmittelprodukt oder die Vorrichtung mit einem Roboter ein Kontrollssystem auf, das ausgelegt ist, wenigstens einen Zustandsparameter, der durch die von der Kamera bereitgestellte Information bestimmt wird, zu überwachen, und zu bestimmen, ob in Abhängigkeit des wenigstens einen Zustandsparameters eine vorbestimmte Bedingung erfüllt wurde, die eine Maßnahme, insbesondere eine Wartungsmaßnahme bedingt. Der Zustandsparameter kann allen vorgenannten Größen, die durch die Kamera bestimmt werden, entsprechen, oder davon abgeleiteten Größen. Weiterhin kann eine Vorgabe, die dem Kontrollsystem der Vorrichtung durch den Bediener vorgegeben wurde, berücksichtigt werden.

In einer Ausführungsform ist ein Speicherelement vorgesehen, das ausgelegt ist, die mit der Kamera ermittelte Information abzuspeichern. Somit kann insbesondere die Veränderung eines Zustandsparameters oder einer anderen von der Kamera bestimmten Information über die Zeit ermittelt werden, und daher eine genauere Vorhersage über den ordnungsgemäßen Betrieb oder die Wartungsbedürftigkeit der Vorrichtung getroffen werden. Weiterhin kann die Information im Speicherelement nach einem Betriebsausfall oder bei einer Wartung überprüft werden, um zu sehen, inwieweit sich die relevanten Informationen bezüglich des Systems während des Betriebs verändern, um geeignete Anpassungen insbesondere an den Steuerungsvorgaben der Vorrichtung, vornehmen zu können.

Weiterhin können mit der Kamera die Einstellungen der Schneideinrichtung überwacht werden. Insbesondere kann die relative Ausrichtung und Neigung der Bauteile der Schneideinrichtung oder des Roboters überwacht werden. Beispielsweise kann die Neigung der Produktzufuhr, die Geschwindigkeit der Produktzufuhr, die Positionierung der Schneideinrichtung bezüglich der Produktzufuhr, und die Positionierung der Aufnahmeeinrichtung bezüglich der Schneideinrichtung oder die Position des Robotergreifers oder der Roboterarme überwacht werden. Weiterhin können die Anschläge überwacht werden, insbesondere, ob das Lebensmittelprodukt im Anschlag mit der Schneideinrichtung ist, weiterhin ob das Lebensmittelprodukt im Anschlag mit einem eventuell vorgesehenen Greifer am gegenüberliegenden Ende von der Schneideinrichtung ist.

Die Sauberkeit der Vorrichtung kann überwacht werden, da Verschmutzungen durch die Kamera und die Auswerteeinrichtung erkannt werden können.

In manchen Ausführungsformen kann die Art des Lebensmittelproduktes durch die Kamera ermittelt werden, um zu überprüfen, ob das Lebensmittelprodukt den Vorgaben entspricht. Insbesondere kann überprüft werden, ob das gewählte Schneidprogramm oder Bewegungsprogramm für das Lebensmittelprodukt geeignet ist. Weiterhin können Auffälligkeiten oder Beschädigungen sowohl an der Vorrichtung, als auch am Lebensmittelprodukt durch die Kamera und die Auswerteeinrichtung erfasst werden.

Die Erfindung wird nun anhand von bevorzugten Ausführungsformen erläutert, anhand der nachfolgenden Figuren:
- Figur 1: zeigt eine schematische Querschnittsansicht einer Ausführungsform der erfindungsgemäßen Vorrichtung zum Aufschneiden von einem Lebensmittelprodukt.
- Figur 2: zeigt eine dreidimensionale Ansicht einer Ausführungsform der erfindungsgemäßen Vorrichtung mit einem Roboter zum Verlagern eines Lebensmittelproduktes.

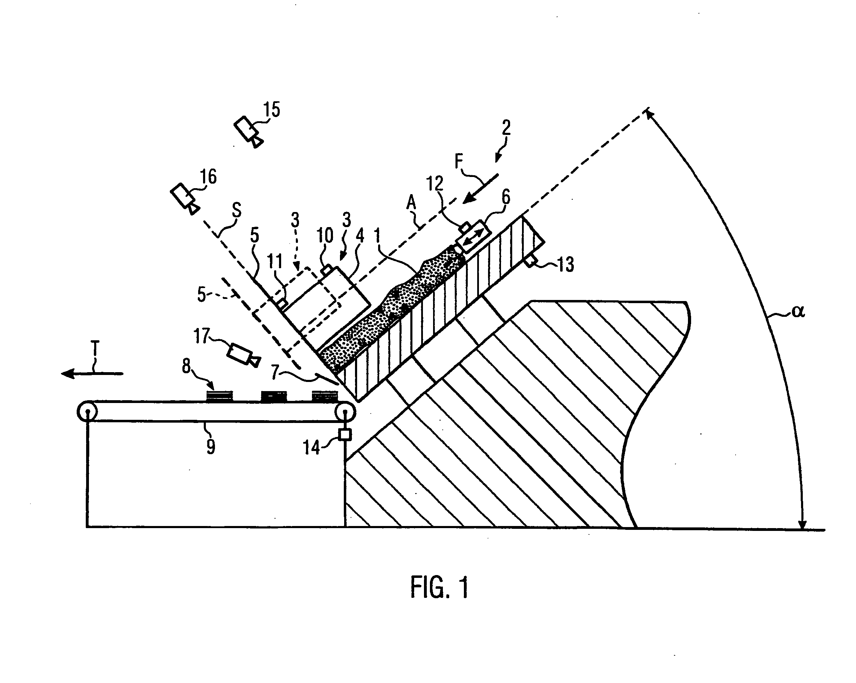

Figur 1 zeigt eine Vorrichtung zum Aufschneiden von einem Lebensmittelprodukt 1.

Das Lebensmittelprodukt 1 ist insbesondere eine Lebensmittelstange, zum Beispiel eine Wurst-, Käse- oder Schinkenstange. Das Lebensmittelprodukt 1 kann einen gleichmäßigen oder einen über seine Länge variablen Querschnitt aufweisen.

Das Lebensmittelprodukt 1 ist auf einer Produktzufuhr 2 angeordnet, die sich insbesondere geneigt hin zu einer Schneideinrichtung 3 erstreckt. Die Schneideinrichtung 3 weist einen Antrieb 4, insbesondere in Form eines Elektromotors mit einem eventuell zugeordneten Getriebe, und ein Schneidmesser 5 auf. Das Schneidmesser 5 kann insbesondere sichelförmig gestaltet sein. Das Schneidmesser 5 rotiert um eine Rotationsachse A, die sich insbesondere parallel zur Vorschubrichtung F der Produktzufuhr 2 erstreckt. Das Lebensmittelprodukt 1 kann an seinem der Schneideinrichtung 3 abgewandten Ende von einem Greifer 6 ergriffen werden.

Das Schneidmesser rotiert somit in einer Schneidebene S, und schneidet einzelne Scheiben 7 des Lebensmittelproduktes 1 ab. Die Scheiben 7 werden nach dem Schneidmesser 5 in Stapeln 8 angeordnet. Die Stapel 8 sind auf einem Fördermittel 9, insbesondere einem Förderband, angeordnet, und werden von dem Fördermittel 9 in Förderrichtung T weitergefördert.

Eine Vielzahl von Vorgaben können für die Schneideinrichtung 3 eingestellt werden. Insbesondere kann der Winkel a eingestellt werden, der angibt, inwieweit die Produktzufuhr 2 aus der Horizontalen angestellt ist. Weiterhin kann die Geschwindigkeit des Antriebs 4 vorgegeben werden. Eine weitere Vorgabe ist die Position des Schneidmessers 5. Dafür kann die Schneideinrichtung 3 bestehend aus Antrieb 4 und Schneidmesser 5, in verschiedenen Positionen verfahren werden, sowohl in Vorschubrichtung F, als auch in den Richtungen orthogonal zur Vorschubrichtung F. Eine weitere Position der Schneideinrichtung 3 ist in Figur 1 mit gestrichelten Linien angegeben.

Eine weitere Vorgabe für das Schneidprogramm ist die Bewegung des Greifers 6, insbesondere wann der Greifer 6 in Eingriff mit dem Lebensmittelprodukt 1 kommt. Weiterhin kann bestimmt werden, wann der Greifer 6 das verbleibende Lebensmittelprodukt 1 nach Beendigung des Aufschneidvorgangs freigibt. Weitere Vorgaben bezüglich des Greifers 6 sind die Kraft mit der er das Ende des Lebensmittelprodukts 1 in Vorschubrichtung F beaufschlagt, und die Kraft mit der die Greiferbacken in das Lebensmittelprodukt 1 eingreifen.

Weitere Vorgaben des Schneidprogramms können die Geschwindigkeit des Fördermittels 9 in Förderrichtung T sein, und die Abfolge von Stillstand und Bewegung des Fördermittels 9. Insbesondere kann durch eine langsame Bewegung des Fördermittels 9 während des Aufschneidens des Lebensmittelproduktes 1 eine versetzte Anordnung von mehreren Scheiben 7 in einen Stapel 8 erreicht werden. Weiterhin bedingt die Bewegung des Fördermittels 9, dass die einzelnen Stapel 8 voneinander abgesetzt werden können.

Es kann eine Vielzahl von Sensoren vorgesehen sein, die Zustandsparameter erfassen, oder die Größen oder Informationen erfassen, aus denen Zustandsparameter abgeleitet werden können. Insbesondere kann ein Antriebssensor 10 am Antrieb 4 der Schneideinrichtung vorgesehen sein, der den Motorstrom des Antriebs 4, die Geschwindigkeit des Antriebs 4, die Temperatur des Antriebs 4, und/oder eine Vibration am Antrieb 4 als Zustandsparameter erfassen kann.

Weiterhin kann ein Schneidmessersensor 11 vorgesehen sein, der die Geschwindigkeit des Schneidmessers 5, die Temperatur des Schneidmessers 5, oder die Vibration am Schneidmesser 5, als Zustandsparameter erfassen kann.

Die Vibration wird insbesondere über Beschleunigungssensoren oder Dehnmessstreifen erfasst.

Der Schneidmessersensor 11 kann durch Erfassen der Beschleunigung als Zustandsparameter insbesondere die Zeitpunkte ermitteln, an denen das Schneidmesser 5 in Eingriff mit dem Lebensmittelprodukt 1 kommt.

Weiterhin kann ein Greifersensor 12 vorgesehen sein, der insbesondere ermöglicht, die Position, Geschwindigkeit, und/oder Temperatur des Greifers 6 als Zustandsparameter zu erfassen.

Zudem kann eine Vibration am Greifer 6 erfasst werden. Somit kann die Vorschubbewegung des Lebensmittelprodukts 1 genau überwacht werden. Weiterhin kann ein Maschinenrahmensensor 13, insbesondere an der Produktzufuhr 2, aber auch an einer anderen Position am Maschinenrahmen vorgesehen werden. Mit dem Maschinenrahmensensor 13 werden Vibrationen am Maschinenrahmen, insbesondere an der Produktzufuhr 2, als Zustandsparameter erfasst.

Weiterhin kann auch am Fördermittel 9 ein Fördermittelsensor 14 vorgesehen werden. Mit dem Fördermittelsensor 14 kann beispielsweise das Gewicht der einzelnen Stapel 8 oder Scheiben 7 als Zustandsparameter erfasst werden. Weiterhin kann der Fördermittelsensor 14 in manchen Ausführungsformen alternativ oder zusätzlich Vibrationen am Fördermittel als Zustandsparameter erfassen.

Die mit den vorgenannten Sensoren 10, 11, 12, 13, 14 erfassten Informationen stellen entweder Zustandsparameter dar, oder können in Zustandsparameter umgerechnet werden. Durch eine Überwachung der Zustandsparameter kann festgestellt werden, ob eine vorbestimmte Bedingung erfüllt wurde, die insbesondere eine Wartungsmaßnahme bedingt. So kann zum Beispiel eine vorbestimmte Bedingung durch einen Anstieg der Vibrationen an einem der Sensoren erfüllt sein, woraufhin eine vorbestimmte Wartungsmaßnahme, beispielsweise der Austausch oder das Nachschleifen des Schneidmessers 5 bedingt wird. Zugleich kann durch den Verlauf der Zustandsparameter vorhergesagt werden, wann die Wartungsmaßnahme notwendig ist.

Generell gilt, dass bei Maschinen verschiedene Bauteile vorliegen, die im Laufe der Betriebszeit, z.B. durch Verschleiß, zu einem Ausfall der Vorrichtung führen können. Durch eine Vorhersage der Maschinenausfälle können die ausfallbedingten Standzeiten minimiert werden. Weiterhin können entsprechende Ersatzteile prophylaktisch ausgetauscht werden, oder die benötigten Ersatzteile können bereits bestellt werden, um die Reparaturzeit zu optimieren.

Insbesondere kann durch die Überwachung der Zustandsparameter im Vorhinein berechnet werden, wann welche Bauteile ausfallen. Die Vorherberechnung berücksichtigt insbesondere auch die Vorgaben, die in einem Kontrollsystem insbesondere für das Schneidprogramm gemacht werden.

Beispielsweise kann eine ständig ansteigende Temperatur des Antriebs oder ein Ansteigen des Motorstroms des Antriebs erkannt werden, und daraus berechnet werden, wie lange der Antrieb noch betrieben werden kann, bis es zu einem Ausfall kommt. Dies kann insbesondere in Abhängigkeit der Vorgaben für verschiedene Schneidprogramme oder auch in Abhängigkeit der Vorgaben für verschiedene Produkte geschehen.

Ein möglicher Zustandsparameter, der überwacht werden kann, ist der Schneiddruck, der an der Schneidkante des Messers anliegt. Dieser kann entweder direkt am Messer, oder indirekt durch eine Messung am Antrieb bestimmt werden. So kann beispielsweise eine erhöhte Motortemperatur oder ein erhöhter Motorstrom ein Hinweis auf ein nötiges Nachschärfen des Messers oder auf das Ende der Lebensdauer des Messers sein.

Insbesondere können während des Betriebs Vergleichsparameter erfasst werden, die mit den Zustandsparametern in Relation gesetzt werden, um Rückschlüsse auf Zustandsveränderungen von Bauteilen zu ermöglichen.

Erfindungsgemäß wird zusätzlich die im Kontrollsystem gewählte wenigstens eine Vorgabe bei der Berechnung der vorbestimmten Bedingung berücksichtigt, damit nicht nur in Abhängigkeit der Zustandsparameter, sondern auch in Abhängigkeit der Vorgaben des Kontrollsystems bestimmt werden kann, ob ein ordnungsgemäßer Betrieb der Vorrichtung vorliegt.

Beispielsweise kann nach einer Wartung für jeweils gewählte Vorgaben eines Schneidprogramms ein Satz an Zustandsparametern mittels den Sensoren erfasst werden, der dann als Vergleichswert abgespeichert wird. Eine Veränderung der Zustandsparameter ausgehend von diesen Vergleichswerten wird überwacht, wobei eine vorbestimmte Abweichung, eine Wartungsmaßnahme bedingt.

Insbesondere wird bei Vorrichtungen zum Aufschneiden von einem Lebensmittelprodukt 1 in der Form von Slicern die Motortemperatur des Antriebs 4 erfasst, wodurch sich Rückschlüsse auf die Temperatur im Schneidgehäuse ergeben, die Einfluss auf die Produkttemperatur nehmen kann, und damit eine für die Hygiene relevante Größe darstellt. Sollte somit eine zu hohe Temperatur am Antrieb 4 vorliegen, aus der der Zustandsparameter der Temperatur des Lebensmittelprodukts 1 berechnet werden kann, die eine vorbestimmte Bedingung erfüllt, wird insbesondere ein Warnhinweis ausgegeben, oder die Geschwindigkeit des Antriebs angepasst, damit die Hygieneanforderungen eingehalten werden können. Die vorbestimmte Bedingung kann von der Vorgabe der Art des Lebensmittelproduktes abhängig sein. Alternativ kann auch direkt die Temperatur des Lebensmittelprodukts 1 erfasst werden.

Weiterhin kann im Greifer 6 der Motorstrom des Motors erfasst werden, der den Vorschub des Lebensmittelprodukts 1 gewährleistet. Beim Heranfahren des Greifers 6 an das Produkt 1 kann somit erkannt werden, wann ein Kontakt zwischen Greifer und Produkt 1 vorliegt. Weiterhin kann durch den Motorstrom bestimmt werden, wenn ein weiterer Vorschub des Produkts 1 aus betriebstechnischen Gründen, beispielsweise wegen einer Fehlfunktion, nicht mehr möglich ist.

Insbesondere kann der Motorstrom des Antriebs der Greiferbacken erfasst werden, da durch diesen Motorstrom bestimmt werden kann, ob die Greifer sicher mit dem Produkt in Verbindung sind.

Eine weiterer Zustandsparameter, der direkt erfasst werden kann, ist die Schwingung der Schneidkante des Schneidmessers 5. Mit einem Beschleunigungssensor oder Dehnmesstreifen am Schneidmesser 5 kann somit eine Berührung des Messers mit dem Lebensmittelprodukt erkannt werden.

Insbesondere können für die Überwachung der Zustandsparameter auch Kameras eingesetzt werden, wobei die Kameras auch unabhängig von der Überwachung der Zustandsparameter die erfindungsgemäße Aufgabe erfüllen.

In Figur 1 ist eine Vorschubkamera 15 vorgesehen, die den Vorschubvorgang des Lebensmittelproduktes 1 auf der Produktzufuhr 2 überwachen kann. Insbesondere kann die Kamera 15 die jeweiligen Positionen des Lebensmittelproduktes 1 und des Greifers 6 erfassen, und daraus auch Zustandsparameter, wie beispielsweise die Vorschubgeschwindigkeit, ermitteln. Weiterhin kann die Vorschubkamera die Ausrichtung des Lebensmittelprodukts 1 überwachen, insbesondere die Mittenausrichtung. Das Lebensmittelprodukt 1 ist weiterhin in gewissen Ausführungsformen im Anschlag mit Seitenanschlägen. Die Vorschubkamera 15 kann überwachen, ob das Lebensmittelprodukt 1 wie vorbestimmt mit zumindest einem Seitenanschlag in Kontakt ist.

Weiterhin kann eine Schneideinrichtungskamera 16 vorgesehen sein. Die Schneideinrichtungskamera ist insbesondere in der Schneidebene S angeordnet. Die Schneideinrichtungskamera 16 ermöglicht es, die ordnungsgemäße Funktion des Schneidmessers 5 zu überwachen. Insbesondere kann überwacht werden, ob das Messer den geometrischen Anforderungen der Maschine entspricht. Dies kann beispielsweise nicht mehr der Fall sein, wenn ein Messer zu oft geschliffen wurde. Weiterhin kann überprüft werden, ob das verwendete Messer ein Originalteil ist. Die Kamera kann auch das dynamische Verhalten des Schneidmessers erfassen, und darüber feststellen, ob eine Fehlfunktion der Vorrichtung oder Verschleiß vorliegt.

Weiterhin kann eine Schneidprozesskamera 17 vorgesehen sein, die im Wesentlichen auf die Schnittfläche des Lebensmittelprodukts 1 und/oder der oberste Scheibe des Stapels 8 gerichtet ist. Die Schneidprozesskamera kann einerseits den Schneidprozess während dessen Durchführung überwachen und andererseits die Produkte des Schneidprozesses, nämlich die Scheiben 7, erfassen und feststellen, ob sie die gewünschten Zustandsparameter aufweisen. Insbesondere kann die Form, Ausrichtung, Größe oder Dicke der Scheiben oder der Schneidkante am Lebensmittelprodukt 1 als Zustandsparameter oder Information erfasst werden.

Zudem kann die relative Anordnung der einzelnen Scheiben 7 auf dem Stapel 8 kontrolliert werden.

Die Kameras 15, 16, 17 erfassen insbesondere Licht mit Wellenlängen im sichtbaren Bereich.

Alternativ dazu können aber auch Wärmebildkameras eingesetzt werden, die Aufschluss über die Temperaturverteilung an der Vorrichtung oder am Lebensmittelprodukt 1 geben. Insbesondere kann die Temperaturverteilung im Bereich der Produktzufuhr 2, der Schneideinrichtung 3, oder auf dem Fördermittel 9 erfasst werden. Die Temperatur stellt einen Zustandsparameter oder Information dar, aus der ein Zustandsparameter abgeleitet werden kann. Auch damit kann der Betrieb der Vorrichtung überwacht werden.

Alternativ zu Wärmebildkameras können auch beliebige andere berührungslose Temperatursensoren zum Erfassen der temperaturbezogenen Zustandsparameter eingesetzt werden.

Wenn eine ungünstige Temperatur vorliegt, kann dem Bedienpersonal der Maschine ein Hinweis während des Betriebs gegeben werden. Mit diesem Hinweis kann gleichzeitig auch eine Empfehlung für weiteres Vorgehen ausgegeben werden, wie z.B. der Vorschlag, die Schneidgeschwindigkeit zu verändern. Weiterhin kann die Schneidgeschwindigkeit auch automatisch verändert werden.

Zudem kann dem Bediener auch mit einer gewissen Vorlaufzeit ein Hinweis gegeben werden, der ihn auf das bevorstehende notwendige Auswechseln, beziehungsweise Nachschleifen des Schneidmessers 5 aufmerksam macht.

Insbesondere ist es vorteilhaft, die Temperatur der Schneidfläche der frisch abgeschnittenen Scheiben 7, beziehungsweise der Schneidkante des Lebensmittelprodukts 1 zu erfassen, da dies einen Zustandsparameter darstellt oder daraus wenigstens ein Zustandsparameter des Schneidprozesses abgeleitet werden kann.

Gewöhnlich tritt eine höhere Temperatur auf, wenn das Schneidmesser 5 nicht mehr die vorbestimmte und gewünschte Schärfe aufweist.

Insbesondere kann die Temperatur des aufzuschneidenden Lebensmittelprodukts 1 vorzugsweise direkt vor dem Aufschneiden gemessen werden. Diese Information kann ausgewertet und/oder gespeichert werden, um die vorbestimmte Bedingung zu ermitteln. Damit kann bestimmt werden wann und/oder warum das Schneidmesser 5 nicht mehr die gewünschte Schärfe aufweist.

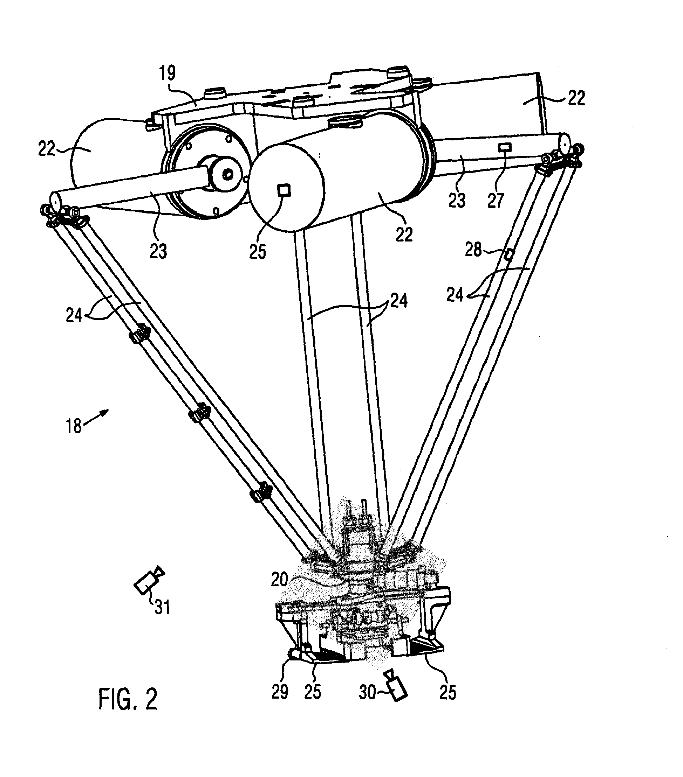

Figur 2 zeigt eine Ausführungsform einer erfindungsgemäßen Vorrichtung mit einem Roboter zum Verlagern eines Lebensmittelprodukts. Der Roboter 18 weist insbesondere eine Deltakinematik auf. An seinem oberen Ende weist der Roboter 18 eine Aufhängung 19 auf, an seinem unteren Ende eine Werkzeugaufnahme 20, an der insbesondere ein Greifer 21 befestigt ist. An der Aufhängung 19 sind drei Antriebe 22, insbesondere in Form von elektrischen Servomotoren, vorgesehen, an denen jeweils ein oberer Roboterarm 23 vorgesehen ist, der mit Hilfe der Antriebe 22 verschwenkt werden kann. An dem dem Antrieb 22 gegenüberliegenden Ende des oberen Roboterarms 23 sind schwenkbar untere Roboterarme 24 vorgesehen, die sich bis zur Werkzeugaufnahme 20 erstrecken, an der sie ebenfalls schwenkbar befestigt sind. Insbesondere sind jeweils zwei parallele untere Roboterarme 24 pro oberem Roboterarm 23 vorgesehen.

Die vorbeschriebene Kinematik bedingt, dass der Greifer 21 zügig versetzt werden kann, und somit effizient ein Lebensmittelprodukt verlagern kann. Der Greifer 21 weist insbesondere zwei gegenüberliegende Greiferauflagen 25 auf, die voneinander entfernt und zueinander hingefahren werden können, so dass sie mit ihren sich im Wesentlichen horizontal erstreckenden Auflageteil Lebensmittelprodukte, insbesondere Stapel von Lebensmittelscheiben, aufnehmen können.

Erfindungsgemäß wird bei dem vorgenannten Roboter wenigstens ein Zustandsparameter überwacht, und in Abhängigkeit des Bewegungsprogramms bestimmt, ob eine vorbedingte Bedingung erfüllt wurde, die insbesondere eine Wartungsmaßnahme bedingt.

So kann beispielsweise der Antriebsstrom für die Roboterarme 23 mit einem Antriebssensor 26 erfasst werden. Alternativ oder zusätzlich kann die Geschwindigkeit der Roboterarme mittels eines Inkrementalgebers im Antriebssensor 26 erfasst werden. Weiterhin kann der Antriebssensor 26 die Temperatur des Antriebs 22 erfassen. In manchen Ausführungsformen ist es auch möglich, dass der Antriebssensor eine Vibration des Antriebs 22 erfasst. Der Antriebssensor 26 kann entweder nur auf einem Antrieb 22, auf mehreren Antrieben 22, oder auf allen Antrieben 22 vorgesehen sein. Weiterhin können auch Roboterarmsensoren 27, 28 auf dem oberen und/oder unteren Roboterarm 23, 24 vorgesehen sein. Die oberen und unteren Roboterarmsensoren 27, 28 können insbesondere die Vibration, das heißt die Beschleunigung, aber auch die Neigung und/oder Position der Roboterarme 23, 24 erfassen. Aus der Position kann beispielsweise auch die Geschwindigkeit der Roboterarme 23, 24 abgeleitet werden.

Weiterhin kann ein Greifersensor 29 am Greifer 21 vorgesehen sein, mit dem die Position, Geschwindigkeit, Beschleunigung, und/oder Vibrationen, des Greifers 21 erfasst werden können. Insbesondere kann der Greifersensor 29 auch eine Temperatur am Greifer bestimmen, oder eine Temperatur des mit dem Greifer 21 erfassten Lebensmittelprodukts.

Zusätzlich oder alternativ können an der Vorrichtung mit dem Roboter 18, auch Kameras 30, 31 vorgesehen sein. Die Kameras 30, 31 können entweder stationär an der Vorrichtung, oder am Roboter 18 befestigt sein, so dass sie sich mit diesem bewegen.

Eine Greiferkamera 30 ist derart angeordnet, dass sie den Greifer 21 visuell erfasst. Dabei kann die Greiferkamera 30 entweder am Greifer 21 befestigt sein, so dass sie sich mit dem Greifer 21 bewegt, oder stationär insbesondere in einer Endlage des Greifers 21 befestigt sein, so dass sie den Greifer 21 visuell erfasst, wenn er sich in der Endlage befindet. Insbesondere kann die Kamera 30 auf der Auflage befestigt sein, von der die Lebensmittelprodukte aufgenommen oder auf der die Lebensmittelprodukte abgelegt werden. Mit der Kamera 30 und einer geeigneten Auswertevorrichtung kann insbesondere ein Zustandsparameter und/oder eine Information bezüglich des Greifers 21 und/oder des Lebensmittelprodukts erfasst werden. Insbesondere kann die Position des Lebensmittelproduktes, beziehungsweise der Mittelpunkt oder Schwerpunkt des Lebensmittelprodukts erfasst werden, um zu entscheiden, ob das Lebensmittelprodukt sicher ergriffen werden kann, beziehungsweise geeignet abgelegt worden ist. Weiterhin kann die Greiferkamera 30 erfassen, ob die Greiferauflagen 25 ordnungsgemäß funktionieren, insbesondere die vorgegebenen Positionen einnehmen und die vorgegebene Bewegung durchführen.

Zudem kann eine Roboterkamera 31 vorgesehen sein, die den Roboter 18 wenigstens teilweise oder vollständig visuell erfasst. Die Roboterkamera 31 kann insbesondere die Positionen der einzelnen Roboterarme 23, 24 bestimmen, und so die ordnungsgemäße Funktion des Roboters überwachen. Weiterhin kann die Roboterkamera auch die Position des Greifers 21 überwachen, und somit auch dessen Bewegungen überwachen.

Aus den Informationen, die durch die Kameras 15, 16, 17, 30, 31 erfasst werden, können Zustandsparameter der Vorrichtungen berechnet werden, mit denen in Abhängigkeit der Vorgaben bestimmt werden kann, ob eine vorbestimmte Bedingung erfüllt wird, die insbesondere eine Wartungsmaßnahme bedingt. Alternativ kann die vorbestimmte Bedingung auch eine Notabschaltung bedingen.

Die durch die Kamera bereitgestellte Information kann ausgewertet werden, und die Vorrichtung kann einem Bediener über Betriebszustände informieren und Hinweise auf geeignete Anpassungen geben. Weiterhin kann die Kamera ermöglichen, dass Verschleiß verschiedener Bauteile erfasst werden kann, beispielsweise durch Erfassen einer Fehlstellung von gewissen Bauteilen oder eines fehlerhaften Bewegungsverhalten des Roboters. Weiterhin kann aus der Veränderung der mit der Kamera erfassten Information und den daraus berechneten Zustandsparametern über die Zeit berechnet werden, wann Reparaturen oder Wartungsmaßnahmen zu erwarten sind.

## Patentansprüche

1. Vorrichtung mit einem Roboter (18) zum Verlagern eines Lebensmittelproduktes, insbesondere von Lebensmittelscheiben, wobei der Roboter (18)
wenigstens einen Roboterarm (23, 24) aufweist, an dem sich eine Greifereinheit (21) zum Ergreifen der Lebensmittelprodukte befindet, und wobei der Roboter (18) ausgelegt ist, Lebensmittelprodukte von einer Auflage aufzunehmen, und zu einem gewünschten Ort zu verlagern,
wobei die Vorrichtung ein Kontrollsystem aufweist, in dem wenigstens eine Vorgabe für ein Bewegungsprogramm für den Roboter (18) gespeichert wird,
**dadurch gekennzeichnet, dass**
das Kontrollsystem ausgelegt ist, wenigstens einen Zustandsparameter zu überwachen, und in Abhängigkeit des wenigstens einen Zustandsparameters und des Bewegungsprogramms zu bestimmen, ob eine vorbestimmte Bedingung erfüllt wurde, die insbesondere eine Wartungsmaßnahme bedingt.

2. Vorrichtung gemäß Anspruch 1, wobei das Kontrollsystem ausgelegt ist, wenigstens eine Vorgabe für ein Bewegungsprogramm zu speichern, die aus einer Vielzahl von Vorgaben für Bewegungsprogramme gewählt wurde, wobei das Kontrollsystem ausgelegt ist, zusätzlich in Abhängigkeit der wenigstens einen gewählten Vorgabe, zu bestimmen, ob die vorbestimmte Bedingung erfüllt wurde.

3. Vorrichtung gemäß einem der vorangehenden Ansprüche, wobei der wenigstens ein Roboterarm (23) einen elektrischen Antrieb (22) aufweist, und ein Zustandsparameter der Versorgungsstrom dieses Antriebs (22) ist.

4. Vorrichtung gemäß einem der vorangehenden Ansprüche, wobei der wenigstens eine Roboterarm (23) einen elektrischen Antrieb (22) aufweist, und ein Zustandsparameter die Temperatur dieses Antriebs (22) ist.

5. Vorrichtung gemäß einem der vorangehenden Ansprüche, wobei ein Zustandsparameter die Position und/oder Geschwindigkeit des wenigstens einen Roboterarms (23, 24) ist, wobei diese insbesondere mit einem Inkrementalgeber erfasst wird.

6. Vorrichtung gemäß einem der vorangehenden Ansprüche, wobei eine Kamera (15, 16, 17, 30, 31) vorgesehen ist, die wenigstens einen Zustandsparameter der Vorrichtung erfasst.

7. Vorrichtung gemäß Anspruch 6, wobei die Kamera (17, 30, 31) und das Kontrollsystem ausgelegt sind, die Position der Lebensmittelscheiben als Zustandsparameter zu bestimmen.

8. Vorrichtung gemäß Anspruch 6 oder 7, wobei die Kamera (17, 30, 31) und das Kontrollsystem ausgelegt sind, den Mittelpunkt der Lebensmittelscheiben als Zustandsparameter zu bestimmen.

9. Vorrichtung gemäß einem der vorangehenden Ansprüche, wobei das Kontrollsystem ausgelegt ist, einen Betriebsparameter der Vorrichtung anzupassen, wenn die vorbestimmte Bedingung erfüllt wurde.

10. Vorrichtung gemäß einem der vorangehenden Ansprüche, wobei das Kontrollsystem ausgelegt ist, einen Warnhinweis auszugeben, wenn die Bedingung erfüllt wurde.

11. Vorrichtung gemäß einem der vorangehenden Ansprüche, wobei das Kontrollsystem ausgelegt ist, dass wenigstens ein Zustandsparameter kontinuierlich überwacht wird.

12. Vorrichtung gemäß einem der Ansprüche 1 bis 10, wobei das Kontrollsystem ausgelegt ist, dass wenigstens ein Zustandsparameter an diskreten Abtastzeitpunkten überwacht wird.

13. Vorrichtung gemäß Anspruch 11 oder 12, wobei das Kontrollsystem ausgelegt ist, durch Auswerten wenigstens eines Zustandsparameters von verschiedenen Zeitpunkten miteinander zu bestimmen, ob die vorbestimmte Bedingung erreicht wurde.

14. Vorrichtung gemäß einem der vorangehenden Ansprüche, wobei das Kontrollsystem ausgelegt ist, wenigstens einen Zustandsparameter in die Berechnung der vorbestimmten Bedingung einzubeziehen.

15. Vorrichtung gemäß einem der vorangehenden Ansprüche, wobei ein Speicherelement vorgesehen ist, das ausgelegt ist, die Zustandsparameter abzuspeichern.
